# EUROPÄISCHE PATENTSCHRIFT

(11) **EP 1 695 925 B1**
(45) Veröffentlichungstag und Bekanntmachung des Hinweises auf die Patenterteilung: **29.10.2008**
(21) Anmeldenummer: 06002401.5
(22) Anmeldetag: 07.02.2006
(51) Int. Cl.: B65G 1/04

(54) **Regallager und Verfahren zum Umlagern von Lagergut bei einem Regallager**
Shelf store and method for transferring goods in a shelf store
Magasin à rayonnage et procédé pour transférer d'articles dans un magasin à rayonnage

(30) Priorität: 28.02.2005 DE 102005009695
(43) Veröffentlichungstag der Anmeldung: 30.08.2006
(73) Patentinhaber: KEURO Besitz GmbH & Co. EDV-Dienstleistungs KG, 77855 Achern (DE)
(72) Erfinder: Dipl. -Ing (FH) Gerhard Waltersbacher, 77876 Kappelrodeck (DE)
(74) Vertreter: Blumenröhr, Dietrich

(56) Entgegenhaltungen:
- EP-A- 0 242 730
- GB-A- 1 202 417
- US-A- 6 042 322

## Beschreibung

Die Erfindung betrifft ein Regallager für in Transportbehältnissen aufgenommenes insbesondere stangen- oder plattenförmiges Lagergut, mit zumindest einem Regal, wobei das Regal mehrere zur Aufnahme der Transportbehältnisse dienende nebeneinander und/oder übereinander angeordnete Regalfächer aufweist, und mit zumindest einem Regalbediengerät, wobei das Regalbediengerät eine relativ zum Regalbediengerät insbesondere horizontal verfahrbare Greifvorrichtung zum Umlagern der Transportbehältnisse aufweist. Die Erfindung betrifft darüber hinaus ein Verfahren zum Umlagern von Lagergut bei einem Regallager mit zumindest einem aus mehreren nebeneinander und/oder übereinander angeordneten Regalfächern bestehenden Regal und mit zumindest einem eine Greifvorrichtung zum Umlagern des Lagerguts aufweisenden Regalbediengerät, wobei das Lagergut in Transportbehältnissen aufgenommen und die Transportbehältnisse mittels der am Regalbediengerät vorgesehenen Greifvorrichtung aus den/in die Regalfächer umgelagert werden. Ein derartiges Regallager ist bereits aus GB-A-1 202 417 bekannt.

Üblicherweise wird im Stand der Technik streng unterschieden zwischen einem Regallager für Langgut, das in der Regel in Langgut-Kassetten transportiert und gelagert wird, und einem Regallager für Paletten, insbesondere Euro-Paletten, wobei diese beiden Regallagertypen jedoch nicht miteinander kombinierbar sind bzw. nicht mit demselben Regalbediengerät arbeiten können. Will man aber dennoch eine Regallageranordnung vorsehen, die sowohl für Langgut wie auch für Paletten geeignet ist, so kann man allenfalls zusätzliche Transportschlitten verwenden, das sind Langgutkassetten mit auf ihrer Oberseite angeordneten Aufnahmen für Euro-Paletten. Hierdurch ist es möglich, die Paletten mit Hilfe der Transportschlitten in einem Regallager für Langgutkassetten einzulagern und auch mit dem für Langgutkassetten üblichen Regalbediengerät handzuhaben.

Ein wesentlicher Nachteil bei der Verwendung zusätzlicher Transportschlitten besteht darin, dass jeder Transportschlitten mit zusätzlichen Kosten in Höhe von ca. € 500,-- zu Buche schlägt, so dass bei einem Regallager mit 1000 Fächern allein für die zusätzlichen Transportschlitten Zusatzkosten in Höhe von € 500.000,-- anfallen. Darüber hinaus bedeutet das zusätzliche Gewicht der Transportschlitten von ca. 100 kg pro Schlitten eine entsprechende Gewichtserhöhung des gesamten Regallagers und auch eine Erhöhung des handhabbaren Gewichts beim Regalbediengerät, da dieses nicht nur das Gewicht des Transportschlittens, sondern darüber hinaus auch noch das Gewicht aller darauf gelagerter Paletten nebst Lagergut heben und fördern können muss.

Hiervon ausgehend liegt nun der vorliegenden Erfindung die Aufgabe zugrunde, ein Regallager der eingangs genannten Art zur Verfügung zu stellen, das ein schnelleres und einfacheres Umlagern von Paletten ermöglicht und dabei bevorzugterweise zur Einlagerung und Handhabung sowohl von Langgutkassetten als auch von Paletten geeignet ist und das aber mit weitaus geringerem Aufwand als bei der beschriebenen Lösung mit zusätzlichen Transportschlitten auskommt.

Diese Aufgabe wird erfindungsgemäß dadurch gelöst, dass die Transportbehältnisse aus Paletten bestehen, dass zusätzlich zumindest ein Hubwagen zum Unterfahren und zum Umlagern der Paletten vorgesehen ist, dass der Hubwagen ein Hubgetriebe zum Anheben und/oder Absenken einer oder mehrerer Paletten eines Regalfachs aufweist, und dass das Hubgetriebe von der Greifvorrichtung des Regalbediengeräts betätigbar ist.

Durch diesen zusätzlichen Hubwagen ist es möglich, ein üblicherweise für Langgutkassetten verwendetes Regalbediengerät mit Greifvorrichtung ohne weitere Umrüstarbeiten nun (auch) für Paletten zu verwenden, indem die Paletten mit Hilfe des Hubwagens aus den Regalfächern transportiert und dann die Paletten zusammen mit dem Hubwagen durch das Regalbediengerät zum gewünschten Ort umgelagert werden können, beispielsweise zu einem Sägezentrum oder aber auch zu einem anderen Regalfach.

Der Hubwagen ist dabei zwar dem Regalbediengerät zugeordnet, soll dieses Regalbediengerät jedoch zum Handhaben von Langgutkassetten verwendet werden, so kann der Hubwagen auch in einfacher Weise in ein leeres Regalfach zwischengelagert und vor dem nächsten Umlagern einer Palette wieder durch das Regalbediengerät aus diesem Regalfach herausgeholt werden.

Besonders vorteilhaft im Sinne einer Reduzierung des Herstellungsaufwands für ein solches Regallager ist es hierbei, dass der Hubwagen keinen eigenen Hubantrieb aufweist, sondern in ganz einfacher Weise durch die ohnehin bereits vorhandene Greifvorrichtung des Regalbediengeräts, die zum Handhaben der Langgutkassetten dient, betätigt werden kann, wodurch der Hubwagen mittels eines ihm zugeordneten Hubgetriebes eine Hub- bzw. Absenkbewegung durchführt, durch die die Paletten gegenüber dem Regalfach angehoben und ausgelagert bzw. eingelagert und abgesenkt werden können.

In der abgesenkten Position ist der Hubwagen dazu in der Lage, unter die Paletten in ein bestimmtes Regalfach bis zum Ende der letzten auszulagernden Palette hineinzufahren, dann die auszulagernden Paletten anzuheben und - unter Belassung etwaiger restlicher Paletten im jeweiligen Regalfach - diese Paletten aus dem Regalfach auszulagern.

Hierzu weist der Hubwagen zweckmäßigerweise eine Palettenauflage auf sowie Transportmittel, über die der Hubwagen in ein Regalfach transportierbar ist, wobei die Palettenauflage relativ zum Transportmittel zwischen einer abgesenkten und einer angehobenen Position höhenveränderbar angeordnet ist und wobei die Höhenänderung über das Hubgetriebe generierbar ist.

Von weiterem Vorteil ist es, wenn der Hubwagen zwei Palettenauflagen aufweist, die gegebenenfalls unabhängig voneinander verstellt, also angehoben und abgesenkt werden können. Hierbei ist es zum einen möglich, beide Palettenauflagen von derselben Seite des Hubwagens zu betätigen. Daneben kann der Hubwagen aber auch symmetrisch aufgebaut sein, so dass er jeweils von beiden Seiten betätigt und somit auch ausgehend vom Regalbediengerät in Regale beidseits des für das Regalbediengerät belassenen Ganges eingeschoben und zum Umlagern von Paletten verwendet werden kann.

Was das Transportieren des Hubwagens in das Regalfach bzw. aus dem Regalfach heraus betrifft, so erfolgt dies vorteilhafterweise über eine horizontale Verfahrbewegung der den Hubwagen beaufschlagenden Greifvorrichtung, wie dies beim Aus- bzw. Einlagern von Langgutkassetten bereits durchgeführt wird. Die Transportmittel bestehen dabei aus Laufrollen, Gleitschienen oder anderen vergleichsweise geeigneten Mitteln.

Besonders vorteilhaft ist es, wenn die Regalfächer in Horizontalrichtung so tief ausgebildet sind, dass in einem Regalfach mindestens zwei, insbesondere aber zumindest vier Paletten hintereinander lagerbar sind. Durch diese tiefe Ausführung der Regalfächer lassen sich die wesentlichen Vorteile des erfindungsgemäßen Regallagers ausnützen, da durch das Handhaben der Langgutkassetten das Regalbediengerät ohnehin dazu in der Lage ist, entsprechend langes bzw. tiefes Lagergut handzuhaben. Mit Hilfe eines solchen mehrfachtiefen Regalfaches sowie eines Hubwagens, der zum Umlagern einer entsprechend großen Palettenanzahl in der Lage ist, lässt sich natürlich die Umlagergeschwindigkeit drastisch erhöhen, da mit einem Umlagervorgang eben vier oder fünf Paletten gleichzeitig gehandhabt werden können, selbst wenn diese nicht die gleiche Zielposition haben. Aber selbst wenn der Hubwagen nur zur Handhabung einer Palette geeignet ist, so kann dieser dennoch durch Umlagern einzelner Paletten und deren Zwischenlagerung beispielsweise auf der Hubtraverse des Regalbediengeräts ein insgesamt vergleichsweise schnelleres Umlagern ermöglichen.

Wie bereits angedeutet, soll der Hubwagen aber nicht nur zum Umlagern aller Paletten eines Regalfachs betätigbar sein, sondern auch zum Umlagern nur der vordersten oder mehrerer vorderen Paletten, so dass hiermit beispielsweise in besonders vorteilhafterweise ein nächtliches Vorkommissionieren der Paletten in einem bestimmten Regallagerbereich entsprechend den am nächsten Morgen abzuarbeitenden Kommissionen erfolgen kann. Das heißt, in einem Regalfach können dann nacheinander abzubearbeitende unterschiedliche Paletten angeordnet werden und mit Hilfe des Hubwagens diese Paletten einzeln oder gruppenweise nacheinander aus dem Regalfach herausgeholt und der Weiterbearbeitung zugeführt werden.

Was das Hubgetriebe betrifft, so empfiehlt sich hierfür eine Schwenkhebelanordnung, eine Führungsgestängeanordnung, beispielsweise bestehend aus einer geneigten Führungsebene und hierauf gleitenden geführten Gestängegliedern, oder ähnlichen leichtgängigen, aber belastbaren Getriebeanordnungen. Bei symmetrischem Aufbau des Hubwagens und insbesondere bei zwei Palettenauflagen kann der Hubwagen auch zwei Hubegetriebe aufweisen bzw. ein Hubgetriebe, das von beiden Seiten des Hubwagens betätigbar ist.

Die Regalfächer wiederum sollten in Richtung der Tiefe der Regalfächer erstreckende Fahrschienen für die Transportmittel des Hubwagens, also insbesondere für die Transportrollen aufweisen sowie zusätzlich Palettenauflagen für die zu lagernden Paletten, wobei die Palettenauflagen der Regalfächer höher als die Palettenauflage des Hubwagens in der abgesenkten Position, jedoch tiefer als die Palettenauflage des Hubwagens in der angehobenen Position angeordnet sein muss, um das Unterfahren der Paletten mittels des Hubwagens einerseits und das Ein- und Auslagern der Paletten mittels des Hubwagens andererseits zu ermöglichen.

Das Regalbediengerät schließlich sollte zur Aufnahme des Hubwagens Führungsprofile aufweisen, um dessen Verfahren auf der Hubtraverse des Regalbediengeräts zu führen, wobei aber die Führungsprofile zur Aufnahme anderer Transportbehältnisse, also insbesondere der Langgutkassette entfernbar und insbesondere schwenkbar am Regalbediengerät angeordnet sein sollten.

Der vorliegenden Erfindung liegt darüber hinaus die Aufgabe zugrunde, ein Verfahren zum Umlagern von Lagergut bei einem Regallager zur Verfügung zu stellen, um sowohl Paletten als auch Langgutkassetten mit Hilfe desselben Regalbediengeräts umlagern zu können, dies allerdings mit weitaus geringerem Aufwand als im geschilderten Fall der Transportschlitten.

Diese Aufgabe wird bei einem Verfahren mit den Merkmalen des Oberbegriffs von Anspruch 13 dadurch gelöst, dass die Transportbehältnisse aus Paletten bestehen, dass die Paletten mittels eines Hubwagens umgelagert werden, dass der Hubwagen hierzu unter zumindest die umzulagernde Palette fährt, dass Teile des Hubwagens eine Hubbewegung zum Anheben der Palette durchführt und dass die Hubbewegung des Hubwagens durch eine Greifbewegung der Greifvorrichtung des Regalbediengeräts hervorgerufen wird. Auch hierdurch lassen sich die vorstehend im Zusammenhang mit dem erfindungsgemäßen Regallager geschilderten Vorteile erzielen.

Da die Greifbewegung der Greifvorrichtung im Wesentlichen in horizontaler Richtung erfolgt, muss diese horizontale Greifbewegung in vorteilhafter Weise über ein am Hubwagen angeordnetes Hubgetriebe in eine insbesondere in vertikaler Richtung orientierte Hubbewegung umgesetzt werden. Damit ist es möglich, die ohnehin zum Umlagern von Kassetten vorhandene Greifvorrichtung zum Anheben und Umlagern von Paletten zu verwenden.

Weitere Merkmale und Vorteile der vorliegenden Erfindung ergeben sich aus der nachfolgenden Beschreibung von Ausführungsbeispielen anhand der Zeichnung; hierbei zeigen
- Figur 1: ein erfindungsgemäßes Regallager in Seitenansicht;
- Figur 2: einen Hubwagen für ein erfindungsgemäßes Regallager in Seitenansicht in drei verschiedenen Positionen a), b) und c);
- Figur 3: eine alternative Ausführungsform eines Hubwagens in Seitenansicht, ebenfalls in drei verschiedene Positionen a), b) und c);
- Figur 4: einen schematischen Blick auf das erfindungsgemäße Regalbediengerät in Seitenansicht mit den Verfahrensschritten a), b), c), d) ,e), f) und g).

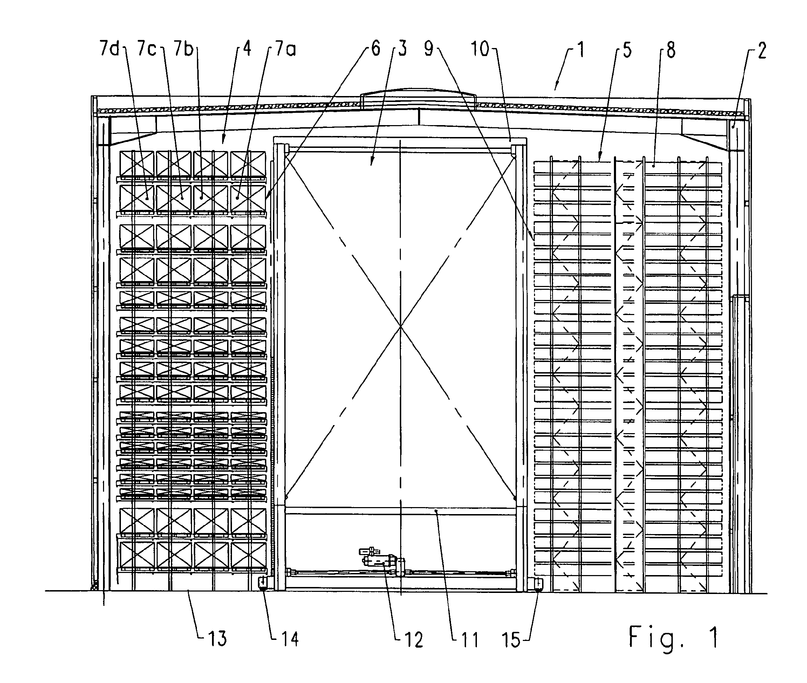

In Figur 1 ist in schematischer Seitenansicht ein Regallager 1 in einer Halle 2 angeordnet, wobei in der Mitte der Halle ein Regalbediengerät 3 in einer sich über die gesamte Hallentiefe erstreckenden Bereich verfahrbar ist. An den seitlichen Wänden der Halle 2 sind zwei Regale 4, 5 vorgesehen, wobei das in Figur 1 linke Regal 4 zur Lagerung von Paletten und das in Figur 1 rechte Regal 5 zur Lagerung von Langgutkassetten dient. Hierzu sind die Paletten in einer Vielzahl von nebeneinander und übereinander angeordneten Regalfächern 6 aufbewahrt, wobei die Regalfächer im gezeigten Ausführungsbeispiel Platz für die Aufnahme von vier Paletten hintereinander entlang der Fachtiefe bieten (es sei angemerkt, dass in Figur 1 die Regalfächer 6 in Seitenansicht dargestellt sind und somit die vier hintereinander in einem Regalfach angeordneten Paletten 7a, 7b, 7c, 7d nebeneinander entlang der Zeichnungsebene dargestellt sind). Auf der gegenüberliegenden Seite weist das Regal 5 für Langgutkassetten 8 ebenfalls mehrere nebeneinander und übereinander angeordnete Regalfächer 9 auf, die in Figur 1 ebenfalls nur in Seitenansicht dargestellt sind.

Das Regalbediengerät 3 weist in üblicher Weise einen Rahmen 10 und eine schematisch dargestellte Hubtraverse 11 auf sowie einen Verfahrantrieb 12 zum Bewegen des Regalbediengeräts 3 entlang von im Hallenboden 13 vorgesehenen Verfahrschienen 14, 15.

Auf der Hubtraverse 11 ist ein in Figur 1 nicht dargestellter Hubwagen in Horizontalrichtung verfahrbar, wobei sich der Hubwagen bis in die Regalfächer 6 erstrecken kann, um auch die am weitesten hinten gelagerte Palette 7d anheben und auslagern zu können.

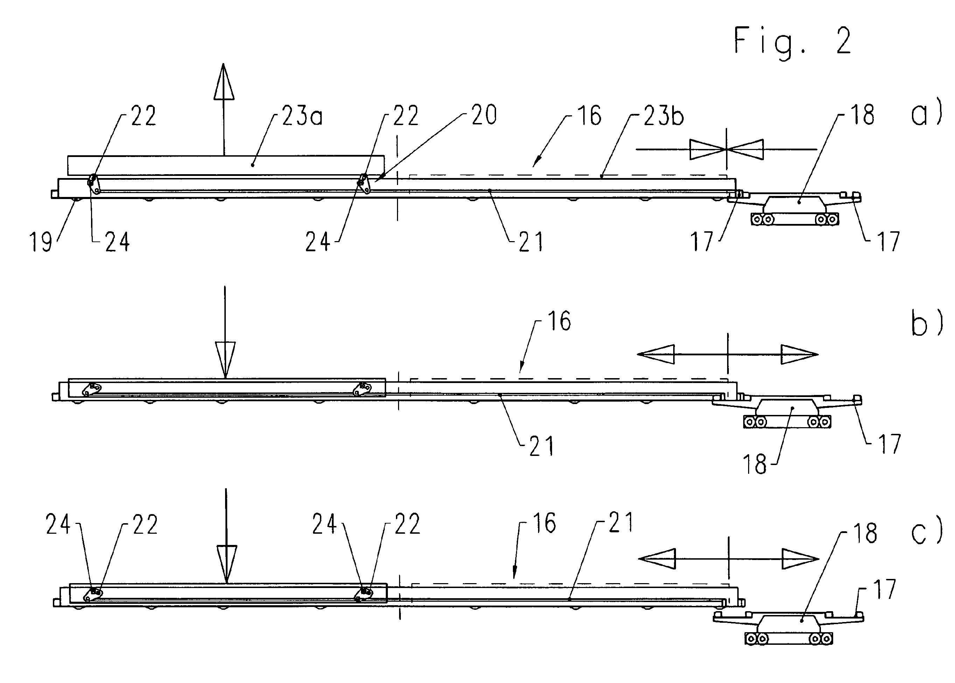

Ein solcher beispielhafter Hubwagen 16 ist in Figur 2 dargestellt, der in der ersten Position gemäß Figur 2a) von einem Greifer 17 einer auf der Hubtraverse 11 verfahrbaren Greifvorrichtung 18 beaufschlagt ist. Der Hubwagen 16 weist insbesondere Transportmittel 19 in Form von Laufrollen auf, mit deren Hilfe der Hubwagen horizontal auf der Hubtraverse bis in die Regalfächer hinein verfahrbar ist, ein Hubgetriebe 20, das insbesondere aus einem Hubgestänge 21 und einer Schwenkhebelanordnung 22 besteht, sowie eine Palettenauflage 23a, die höhenveränderbar relativ zum restlichen Hubwagen und insbesondere zu den Laufrollen 19 angeordnet ist. Zusätzlich zur Palettenauflage 23a ist noch eine zweite Palettenauflage 23b gestrichelt dargestellt, die unabhängig von der ersten Palettenauflage 23a - und insbesondere über ein zweites nicht dargestelltes Hubgetriebe, das von dem in Figur 2 linken Ende des Hubwagens betätigbar ist - betätigt werden kann und zum Umlagern von Paletten vor allem aus einem auf der gegenüberliegenden Seite des Regalbediengerätes angeordneten Regal dient.

Wird nun das Hubgestänge 21 durch den Greifer entsprechend der zangenartigen Greifbewegung (wie sie zum Greifen von Langgut-Kassetten benötigt wird) nach rechts in Horizontalrichtung verstellt, so führt die Schwenkhebelanordnung 22, die einerseits mit dem Hubgestänge 21 und andererseits mit der Palettenauflage 23a verbunden ist, eine Schwenkbewegung um einen am Hubwagen festgelegten Drehpunkt 24 durch und hebt so die Palettenauflage 23a an bzw. senkt diese ab.

Figur 2b) zeigt nun die Position des Hubwagens bei in Mittelstellung befindlichem Greifer 17: Hier hat der Greifer das Hubgestänge 21 bereits losgelassen, das wieder horizontal nach links verschoben ist und die Palettenauflage 23a ist demgemäß nach unten abgesenkt in eine Position, die zum Ein- bzw. Ausfahren des Hubwagens ohne Palette, also zum Unterfahren von Paletten dient.

Figur 2c) zeigt noch eine Position später den vollständig geöffneten Greifer, der zur vollständigen Freigabe des Hubgestänges 21 gegenüber dem Hubwagen etwas nach unten abgesenkt ist, um so beispielsweise den Hubwagen in einem Regalfach abstellen zu können.

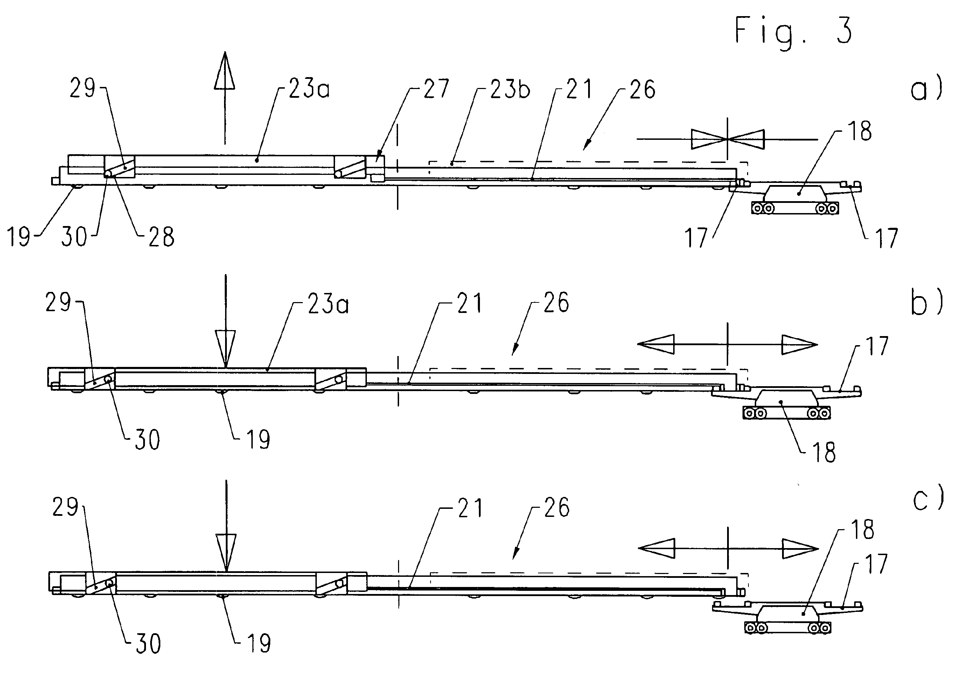

Alternativ hierzu ist in den Figuren 3a), 3b), 3c) ein Hubwagen 26 dargestellt, bei dem jedoch diejenigen Teile, die schon beim Hubwagen 16 in gleicher Art verwirklicht sind, hier mit gleichen Bezugszeichen versehen sind. Anstelle einer Schwenkhebelanordnung 22 besteht das Hubgetriebe 27 aus einem Hubgestänge 21 und aber einer Führungsanordnung 28, die wiederum aus einer schräg zur Horizontalen geneigten Führungsbahn 29, die der Palettenauflage 23a zugeordnet ist, und einer dem Hubwagen 26 zugeordneten Führungsrolle 30 besteht. Wird nun - gemäß Figur 3b) - durch das Öffnen des Greifers 17 das Hubgestänge 21 nach links verschoben, so wird auch die geneigte Führungsbahn 29 nach links verschoben, so dass die Palettenauflage 23 durch den die ortsfest am Hubwagen angeordnete Führungsrolle 30 nach unten in abgesenkte Stellung verfahren wird.

Figur 3c) zeigt wieder den vollständig geöffneten und nach unten abgesenkten Greifer 17.

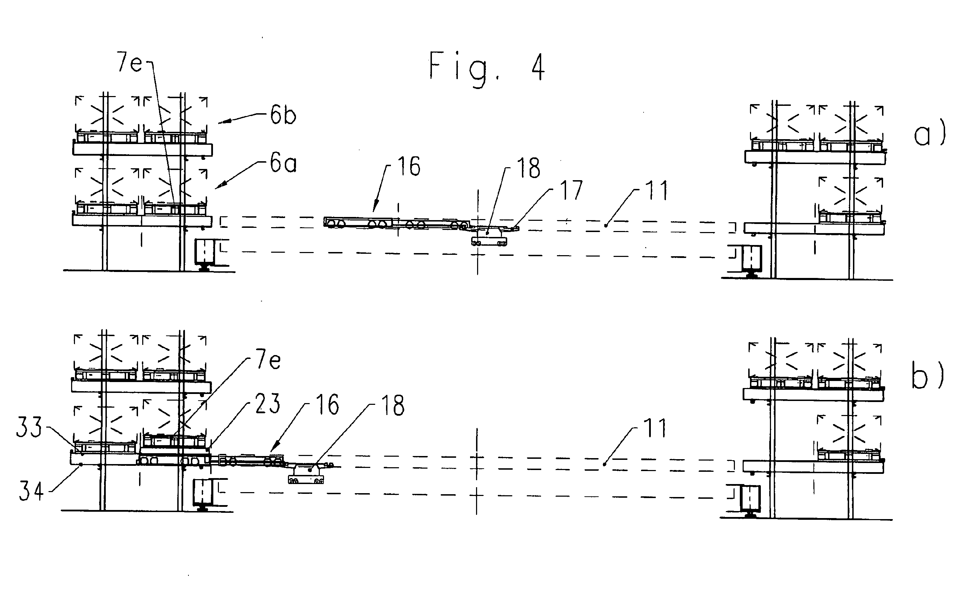

In den Figuren 4a) bis 4g) wird nun schematisch dargestellt, wie der Hubwagen 16 mittels der Greifvorrichtung 18 entlang der Hubtraverse 11 des Regalbediengeräts horizontal verfahren wird, bezogen auf Figur 4a) nach links in Richtung einer Palette 7e. In Figur 4a) ist hierzu der Greifer 17 in der geöffneten Mittelstellung befindlich, das heißt die Palettenauflage 23 ist in abgesenkter Position. Der Hubwagen 16 verfährt hierbei mit seinen Laufrollen 19 auf unterhalb der Palettenauflagen 33 des Regallagers angeordneten Fahrschienen 34 nach links unter die Palette 7e bis in das Regalfach 6a hinein. Der Greifer 17 wird geschlossen und die Palettenauflage 23 wird hierdurch angehoben, wodurch sie in Kontakt mit der Palette 7e kommt und die Palette 7e gegenüber einer Palettenauflage 33 anhebt, auf der die Palette 7e aufgelagert war.

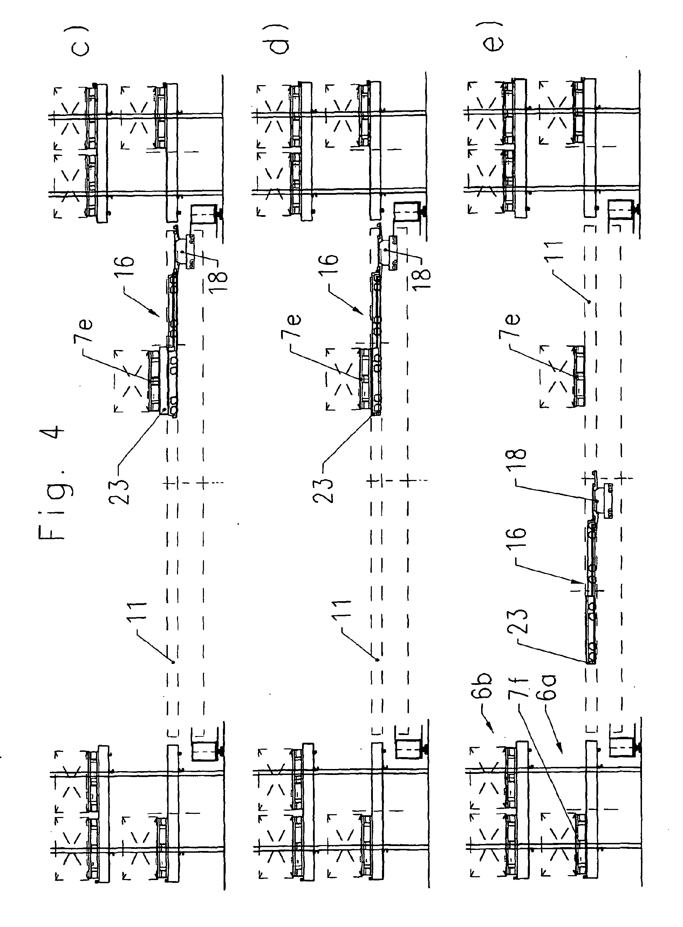

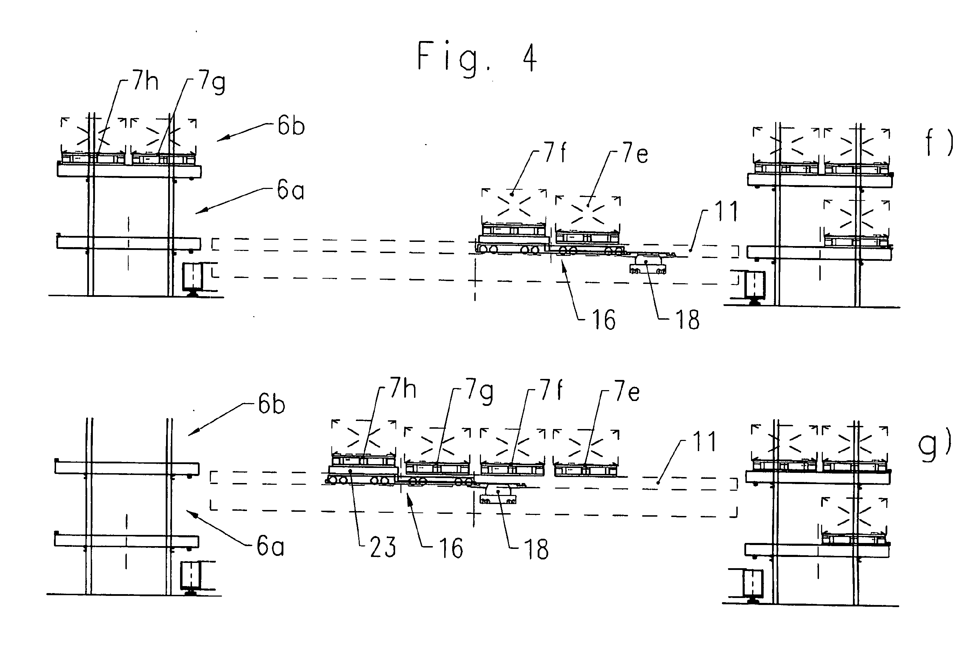

In Figur 4c) fährt der beladene Hubwagen 16 bei geschlossenem Greifer und angehobener Palettenauflage 23 wieder zurück auf das Regalbediengerät. In Figur 4d) öffnet der Greifer in Zwischenstellung und senkt hierdurch die Palettenauflage 23 und die Palette 7e ab auf die Hubtraverse 11 des Regalbediengeräts, um sie dort abzustellen, während der Hubwagen damit beginnt, weitere Paletten 7f, 7g, 7h einzusammeln. Hierzu wird - gemäß Figur 4e) - die auf die Hubtraverse abgestellte Palette 7e vom Hubwagen wieder (bei in Zwischenstellung geöffneten Greifer und abgesenkter Palettenauflage) unterfahren, um eine weitere im Regalfach 6a befindliche Palette 7f auszulagern, siehe Figur 4f).

So ist es möglich, mehrere Paletten 7e, 7f, 7g, 7h - auch aus verschiedenen Regalfächern 6a, 6b - einzusammeln und auf der Hubtraverse des Regalbediengeräts zwischenzulagern (siehe Figur 4g) und anschließend das Regalbediengerät so abzusenken, dass die Paletten über den Hubwagen oder eine andere Transportvorrichtung beispielsweise zu einer nicht dargestellten Weiterverarbeitungsstation transportiert werden können.

Alternativ hierzu ist es natürlich auch möglich, die Palettenauflage des Hubwagens so groß zu gestalten, dass mehrere Paletten und insbesondere alle Paletten eines Regalfachs gleichzeitig umgelagert werden können, wodurch die Umlagerzeit natürlich entsprechend deutlich sinkt.

Zusammenfassend wird durch die vorliegende Erfindung mit äußerst geringem Aufwand eine Möglichkeit geschaffen, mit demselben Regalbediengerät sowohl Langgutkassetten als auch Paletten umzulagern, um so mit nur einem Regalbediengerät und mit nur einer hieran angeschlossenen Infrastruktur vor allem stangen- und plattenförmiges, aber auch nahezu jedes weitere Lagergut umlagern zu können.

## Patentansprüche

1. Regallager für in Transportbehältnissen aufgenommenes insbesondere stangen- oder plattenförmiges Lagergut, mit zumindest einem Regal (4, 5), wobei das Regal mehrere zur Aufnahme der Transportbehältnisse dienende nebeneinander und/oder übereinander angeordnete Regalfächer (6, 9) aufweist, und mit zumindest einem Regalbediengerät (3), wobei das Regalbediengerät eine relativ zum Regalbediengerät verfahrbare Greifvorrichtung (18) zum Umlagern der Transportbehältnisse (7, 8) aufweist,
**dadurch gekennzeichnet,**
**dass** die Transportbehältnisse (7) aus Paletten (7a - 7h) bestehen, dass zusätzlich zumindest ein Hubwagen (16, 26) zum Unterfahren und zum Umlagern der Paletten vorgesehen ist, dass der Hubwagen ein Hubgetriebe (20) zum Anheben und/oder Absenken einer oder mehrerer Paletten eines Regalfachs aufweist, und dass das Hubgetriebe von der Greifvorrichtung (18) des Regalbediengeräts (3) betätigbar ist.

2. Regallager nach zumindest Anspruch 1,
**dadurch gekennzeichnet,**
**dass** der Hubwagen (16, 26) eine Palettenauflage (23, 23a, 23b) aufweist sowie Transportmittel (19), über die der Hubwagen in ein Regalfach (6) transportierbar ist, dass die Palettenauflage (23, 23a, 23b) relativ zum Transportmittel zwischen einer abgesenkten und einer angehobenen Position höhenveränderbar angeordnet ist, und dass die Höhenänderung über das Hubgetriebe (20) generierbar ist.

3. Regallager nach zumindest Anspruch 1,
**dadurch gekennzeichnet,**
**dass** das Transportieren des Hubwagens (16, 26) in das/aus dem Regalfach (6, 6a, 6b) mithilfe einer horizontalen Verfahrbewegung der den Hubwagen beaufschlagenden Greifvorrichtung (18) erfolgt.

4. Regallager nach zumindest Anspruch 2,
**dadurch gekennzeichnet,**
**dass** die Transportmittel (19) aus Laufrollen, Gleitschienen oder dergleichen bestehen.

5. Regallager nach zumindest einem der vorstehenden Ansprüche,
**dadurch gekennzeichnet,**
**dass** die Regalfächer (6, 6a, 6b) so tief ausgebildet sind, dass in einem Regalfach zumindest zwei Paletten (7, 7a - 7h) hintereinander lagerbar sind.

6. Regallager nach zumindest einem der vorstehenden Ansprüche,
**dadurch gekennzeichnet,**
**dass** der Hubwagen (16, 26) zum Umlagern der vordersten, mehrerer vorderen oder aller hintereinander angeordneter Paletten (7, 7a - 7h) eines Regalfachs (6, 6a, 6b) betätigbar ist.

7. Regallager nach zumindest einem der vorstehenden Ansprüche,
**dadurch gekennzeichnet,**
**dass** der Hubwagen zur Aufnahme mehrerer hintereinander anzuordnender Paletten eine Palettenauflage mit einer sich in Richtung der Tiefe des Regalfachs erstreckenden Länge aufweist, die der Gesamttiefe von zumindest zwei und insbesondere vier hintereinander angeordneter Paletten entspricht.

8. Regallager nach zumindest einem der vorstehenden Ansprüche,
**dadurch gekennzeichnet,**
**dass** die Transportbehältnisse aus Kassetten (8) bestehen, und dass die Greifvorrichtung (18) zum Umlagern der Paletten (7, 7a - 7h) mit Hilfe des Hubwagens (16, 26) auch zum Umlagern der Kassetten ohne Hubwagen verwendbar ist.

9. Regallager nach zumindest einem der vorstehenden Ansprüche,
**dadurch gekennzeichnet,**
**dass** das Hubgetriebe (20) eine Schwenkhebelanordnung (22), eine Führungsgestängeanordnung (28, 29) oder dergleichen aufweist.

10. Regallager nach zumindest einem der vorstehenden Ansprüche,
**dadurch gekennzeichnet,**
**dass** die Regalfächer (6, 6a, 6b) sich in Richtung der Tiefe der Regalfächer erstreckende Fahrschienen (34) für die Transportmittel (19) des Hubwagens (16, 26) aufweisen.

11. Regallager nach zumindest Anspruch 2,
**dadurch gekennzeichnet,**
**dass** die Regalfächer (6, 6a, 6b) Palettenauflagen (33) für die zu lagernden Paletten (7, 7a - 7h) aufweisen und dass die Palettenauflagen (33) der Regalfächer höher als die Palettenauflage (23) des Hubwagens (16, 26) in der abgesenkten Position, jedoch tiefer als die Palettenauflage (23) des Hubwagens (16, 26) in der angehobenen Position angeordnet sind.

12. Regallager nach zumindest einem der vorstehenden Ansprüche,
**dadurch gekennzeichnet,**
**dass** das Regalbediengerät Führungsprofile zur Aufnahme des Hubwagens aufweist, und dass die Führungsprofile zur Aufnahme anderer Transportbehältnisse entfernbar, insbesondere schwenkbar am Regalbediengerät angeordnet sind.

13. Verfahren zum Umlagern von Lagergut bei einem Regallager mit zumindest einem aus mehreren nebeneinander und/oder übereinander angeordneten Regalfächern (6, 6a, 6b, 9) bestehenden Regal (4, 5) und zumindest einem eine Greifvorrichtung (18) zum Umlagern des Lagerguts aufweisenden Regalbediengerät (3), wobei das Lagergut in Transportbehältnissen (7, 7a - 7h, 8) aufgenommen und die Transportbehältnisse mittels der am Regalbediengerät vorgesehenen Greifvorrichtung aus den/in die Regalfächer umgelagert werden,
**dadurch gekennzeichnet,**
**dass** die Transportbehältnisse (7) aus Paletten (7a - 7h) bestehen, dass die Paletten mittels zumindest eines Hubwagens (16, 26) umgelagert werden, dass der Hubwagen (16, 26) hierzu unter zumindest die umzulagernde Palette (7, 7a - 7h) gefahren wird, dass Teile (23, 23a, 23b) des Hubwagens (16, 26) eine Hubbewegung zum Anheben der Palette (7, 7a - 7h) durchführen, und dass die Hubbewegung des Hubwagens durch eine Greifbewegung der Greifvorrichtung (18) des Regalbediengeräts hervorgerufen wird.

14. Verfahren nach zumindest Anspruch 13,
**dadurch gekennzeichnet,**
**dass** die Greifbewegung der Greifvorrichtung (18) im wesentlichen in horizontaler Richtung erfolgt und dass diese horizontale Greifbewegung über ein am Hubwagen (16, 26) angeordnetes Hubgetriebe (20) in eine insbesondere in vertikaler Richtung orientierte Hubbewegung umgesetzt wird.

15. Verfahren nach zumindest einem der Ansprüche 13 oder 14,
**dadurch gekennzeichnet,**
**dass** die Transportbehältnisse auch aus Kassetten (8) bestehen, so dass mit demselben Regalbediengerät (3) sowohl Paletten (7, 7a - 7h) als auch Kassetten (8) umgelagert werden können.

## Claims

1. Shelved storage system for goods to be stored, in particular rod-shaped or plate-shaped goods, accommodated in transport containers, with at least one shelving unit (4, 5), wherein the shelving unit has a plurality of shelving compartments (6, 9) to accommodate transport containers disposed adjacent to one another and/or one above the other, and with at least one shelving operating device (3), wherein the shelving operating device has a gripping device (18) which can be moved relative to the shelving operating device for repositioning of the transport containers (7, 8), **characterised in that** the transport containers (7) comprise pallets (7a to 7h), that in addition at least one lifting carriage (16, 26) is provided for moving under the pallets and repositioning them, that the lifting carriage includes a lifting gear (20) for raising and/or lowering one or several pallets of a shelving compartment, and that the lifting gear can be operated by the gripping device (18) of the shelving operating device (3).

2. Shelved storage system as claimed in at least Claim 1, **characterised in that** the lifting carriage (16, 26) has a pallet support (23, 23a, 23b) as well as transport means (19), by means of which the lifting carriage can be transported into a shelving compartment (6), that the pallet support (23, 23a, 23b) is disposed so that it is adjustable in height relative to the transport means between a lowered position and a raised position, and that the change in height can be generated via the lifting gear (20).

3. Shelved storage system as claimed in at least Claim 1, **characterised in that** transporting of the lifting carriage (16, 26) into/out of the shelving compartment (6, 6a, 6b) takes place with the aid of a horizontal displacement movement of the gripping device (18) which acts on the lifting carriage.

4. Shelved storage system as claimed in at least Claim 2, **characterised in that** the transport means (19) comprise rollers or slide rails.

5. Shelved storage system as claimed in at least one of the preceding claims, **characterised in that** the shelving compartments (6, 6a, 6b) are sufficiently deep for at least two pallets (7, 7a to 7h) to be capable of being stored behind one another in one shelving compartment.

6. Shelved storage system as claimed in at least one of the preceding claims, **characterised in that** the lifting carriage (16, 26) can be operated for repositioning the frontmost pallet, a plurality of front pallets or all of the pallets (7, 7a to 7h) disposed one behind another in a shelving compartment (6, 6a, 6b).

7. Shelved storage system as claimed in at least one of the preceding claims, **characterised in that** in order to accommodate a plurality of pallets to be disposed one behind another the lifting carriage has a pallet support with a length which extends in the direction of the depth of the shelving compartment and corresponds to an overall depth of at least two and in particular four pallets disposed one behind another.

8. Shelved storage system as claimed in at least one of the preceding claims, **characterised in that** the transport containers comprise cassettes (8) and that the gripping device (18) can be used for repositioning the pallets (7, 7a to 7h) with the aid of the lifting carriage (16, 26) and also for repositioning the cassettes without the lifting carriage.

9. Shelved storage system as claimed in at least one of the preceding claims, **characterised in that** the lifting gear (20) has a pivot lever arrangement (22) or a guide rod arrangement (28, 29) or the like.

10. Shelved storage system as claimed in at least one of the preceding claims, **characterised in that** the shelving compartments (6, 6a, 6b) have tracks (34) which extending in the direction of the depth of the shelving compartments for the transport means (19) of the lifting carriage (16, 26).

11. Shelved storage system as claimed in at least Claim 2, **characterised in that** the shelving compartments (6, 6a, 6b) have pallet supports (33) for the pallets (7, 7a to 7h) to be stored, and that the pallet supports (33) of the shelving compartments are disposed higher than the pallet support (23) of the lifting carriage (16, 26) in the lowered position, but lower than the pallet support (23) of the lifting carriage (16, 26) in the raised position.

12. Shelved storage system as claimed in at least one of the preceding claims, **characterised in that** the shelving operating device has guide profiles for accommodating the lifting carriage, and that the guide profiles for accommodating other transport containers are disposed so as to be removable, in particular pivotable on the shelving operating device.

13. Method of repositioning goods to be stored in a shelved storage system with at least one shelving unit (4, 5) comprising a plurality of shelving compartments (6, 6a, 6b, 9) disposed adjacent to one another and/or above one another and with at least one shelving operating device (3) having a gripping device (18) for repositioning the goods to be stored, wherein the goods to be stored are accommodated in transport containers (7, 7a to 7h, 8) and the transport containers are repositioned out of/into the shelving compartments by means of the gripping device provided on the shelving operating device, **characterised in that** the transport containers (7) comprise pallets (7a to 7h), that the pallets are repositioned by means of at least one lifting carriage (16, 26), that for this purpose the lifting carriage (16, 26) is moved under at least the pallet (7, 7a to 7h) to be repositioned, that parts (23, 23a, 23b) of the lifting carriage (16, 26) carry out a lifting movement for raising the pallet (7, 7a to 7h), and that the lifting movement of the lifting carriage is brought about by a gripping movement of the gripping device (18) of the shelving operating device.

14. Method as claimed in at least Claim 13, **characterised in that** the gripping movement of the gripping device (18) occurs substantially in the horizontal direction and that this horizontal gripping movement is converted into a lifting movement oriented in particular in a vertical direction by means of a lifting gear (20) disposed on the lifting carriage (16, 26).

15. Method as claimed in at least one of Claims 13 or 14, **characterised in that** the transport containers also comprise cassettes (8), so that not only the pallets (7, 7a to 7h) but also the cassettes (8) can be repositioned with the same shelving operating device (3).

## Revendications

1. Entrepôt à rayonnages pour des articles stockés notamment en forme de barres ou de plaques, reçus dans des récipients de transport, comprenant au moins un rayonnage (4, 5), sachant que le rayonnage présente plusieurs rayons (6, 9) disposés en juxtaposition et/ou en superposition et servant à recevoir les récipients de transport, et comprenant au moins un transstockeur (3), sachant que le transstockeur présente un dispositif de préhension (18) pouvant être déplacé relativement au transstockeur pour transférer les récipients de transport (7, 8),
**caractérisé en ce que** les récipients de transport (7) consistent en des palettes (7a - 7h), **en ce qu'**il est en outre prévu au moins un chariot de levage (16, 26) destiné à se déplacer sous les palettes et à les transférer, **en ce que** le chariot de levage présente un mécanisme de levage (20) pour soulever et/ou abaisser une ou plusieurs palettes d'un rayon, et **en ce que** le mécanisme de levage peut être actionné par le dispositif de préhension (18) du transstockeur (3).

2. Entrepôt à rayonnages selon au moins la revendication 1, **caractérisé en ce que** le chariot de levage (16, 26) présente un support de palette (23, 23a, 23b) ainsi que des moyens de transport (19) au moyen desquels le chariot de levage peut être transporté dans un rayon (6), **en ce que** le support de palette (23, 23a, 23b) est disposé en étant réglable en hauteur par rapport au moyen de transport entre une position abaissée et une position soulevée, et **en ce que** la modification de hauteur peut être produite au moyen du mécanisme de levage (20).

3. Entrepôt à rayonnages selon au moins la revendication 1, **caractérisé en ce que** le transport du chariot de levage (16, 26) dans le/hors du rayon (6, 6a, 6b) s'effectue au moyen d'un mouvement de translation horizontal du dispositif de préhension (18) sollicitant le chariot de levage.

4. Entrepôt à rayonnages selon au moins la revendication 2, **caractérisé en ce que** les moyens de transport (19) consistent en des galets de roulement, des rails de glissement ou analogues.

5. Entrepôt à rayonnages selon au moins l'une des revendications précédentes, **caractérisé en ce que** les rayons (6, 6a, 6b) sont réalisés d'une profondeur telle qu'au moins deux palettes (7, 7a - 7h) peuvent être stockées les unes derrière les autres dans un rayon.

6. Entrepôt à rayonnages selon au moins l'une des revendications précédentes, **caractérisé en ce que** le chariot de levage (16, 26) peut être actionné pour transférer la palette la plus avant, plusieurs palettes avant ou toutes les palettes (7, 7a - 7h) d'un rayon (6, 6a, 6b) qui sont disposées les unes derrière les autres.

7. Entrepôt à rayonnages selon au moins l'une des revendications précédentes, **caractérisé en ce que** le chariot de levage présente, pour recevoir plusieurs palettes à disposer les unes derrière les autres, un support de palette ayant une longueur qui s'étend dans la direction de la profondeur du rayon et qui correspond à la profondeur totale d'au moins deux et notamment de quatre palettes disposées les unes derrière les autres.

8. Entrepôt à rayonnages selon au moins l'une des revendications précédentes, **caractérisé en ce que** les récipients de transport consistent en des cassettes (8), et **en ce que** le dispositif de préhension (18), destiné à transférer les palettes (7, 7a - 7h) à l'aide du chariot de levage (16, 26), peut être également utilisé pour transférer les cassettes sans chariot de levage.

9. Entrepôt à rayonnages selon au moins l'une des revendications précédentes, **caractérisé en ce que** le mécanisme de levage (20) présente un ensemble (22) de levier pivotant, un ensemble (28, 29) de tringlerie de guidage ou analogues.

10. Entrepôt à rayonnages selon au moins l'une des revendications précédentes, **caractérisé en ce que** les rayons (6, 6a, 6b) présentent des rails de roulement (34) pour les moyens de transport (19) du chariot de levage (16, 26), rails qui s'étendent dans la direction de la profondeur des rayons.

11. Entrepôt à rayonnages selon au moins la revendication 2, **caractérisé en ce que** les rayons (6, 6a, 6b) présentent des supports de palette (33) pour les palettes (7, 7a - 7h) à stocker, et **en ce que** les supports de palette (33) des rayons sont disposés plus haut que le support de palette (23) du chariot de levage (16, 26) dans la position abaissée, mais plus bas que le support de palette (23) du chariot de levage (16, 26) dans la position soulevée.

12. Entrepôt à rayonnages selon au moins l'une des revendications précédentes, **caractérisé en ce que** le transstockeur présente des profilés de guidage pour recevoir le chariot de levage, et **en ce que** les profilés de guidage sont disposés avec possibilité d'éloignement, notamment à pivotement, sur le transstockeur afin de recevoir d'autres récipients de transport.

13. Procédé pour transférer des articles stockés dans un entrepôt à rayonnages comprenant au moins un rayonnage (4, 5) constitué de plusieurs rayons (6, 6a, 6b, 9) disposés en juxtaposition et/ou en superposition et au moins un transstockeur (3) présentant un dispositif de préhension (18) pour transférer les articles stockés, sachant que les article stockés sont reçus dans des récipients de transport (7, 7a - 7h, 8) et que les récipients de transport sont transférés hors des/dans les rayons au moyen du dispositif de préhension prévu sur le transstockeur,
**caractérisé en ce que** les récipients de transport (7) consistent en des palettes (7a - 7h), **en ce que** les palettes sont transférées au moyen d'au moins un chariot de levage (16, 26), **en ce que** le chariot de levage est déplacé à cet effet sous au moins la palette (7, 7a - 7h) à transférer, **en ce que** des éléments (23, 23a, 23b) du chariot de levage (16, 26) accomplissent un mouvement de levage pour soulever la palette (7, 7a - 7h), et **en ce que** le mouvement de levage du chariot de levage est produit par un mouvement de préhension du dispositif de préhension (18) du transstockeur.

14. Procédé selon au moins la revendication 13, **caractérisé en ce que** le mouvement de préhension du dispositif de préhension (18) s'effectue essentiellement en direction horizontale, et **en ce que** ce mouvement de préhension horizontal est transformé, par un mécanisme de levage (20) disposé sur le chariot de levage (16, 26), en un mouvement de levage orienté notamment en direction verticale.

15. Procédé selon au moins l'une des revendications 13 ou 14, **caractérisé en ce que** les récipients de transport comprennent également des cassettes (8), de sorte qu'on peut transférer avec le même transstockeur (3) à la fois des palettes (7, 7a - 7h) et des cassettes (8).
